# EUROPÄISCHE PATENTANMELDUNG

(11) **EP 2 434 226 A2**
(43) Veröffentlichungstag der Anmeldung: **28.03.2012**
(21) Anmeldenummer: 11181743.3
(22) Anmeldetag: 19.09.2011
(51) Int. Cl.: F24D 19/10, F24H 9/12

(54) **Verfahren zur energetischen Sanierung von Einrohrheizungen**

(30) Priorität: 23.09.2010 DE 102010046169
(71) Anmelder: Kermi GmbH, 94447 Plattling (DE)
(72) Erfinder: Fonfara, Harald, 94551 Lalling (DE); Heigl, Hans-Jürgen, 94539 Grafling (DE); Harrer, Robert, 94563 Otzing (DE)
(74) Vertreter: Patentanwälte Bressel und Partner

(57) **Zusammenfassung**

Die Erfindung betrifft ein Verfahren zur energetischen Sanierung von Einrohrheizungen, wobei diese mindestens einen Wärmeerzeuger zur Erzeugung eines Heizmittelmassenstromes, eine Umwälzpumpe, ein zentrales Regelventil und mehrere über eine Ringleitung miteinander verbundene, in Reihe geschaltete Heizkörper umfassen und jedem Heizkörper eine Bypassarmatur zur Zuteilung des Heizmittelmassenstromes aus einem zentralen Strangvorlauf vorgeschaltet ist, wobei unabhängig von der Wärmeabnahme der am Einrohrstrang angeschlossenen Heizkörper eine vorab detektierte an einen Sollwertgeber übermittelte Temperaturdifferenz zwischen dem Strangvorlauf und dem Strangrücklauf zumindest annähernd konstant gehalten wird und abhängig von der Wärmeabnahme der am Einrohrstrang angeschlossenen Heizkörper der Primär - Heizmittelmassenstrom am Wärmeerzeuger reduziert wird und wobei über die jedem Heizkörper zugeordnete Bypassarmatur eine gegenläufige dynamische Anpassung des Heizmittelmassenstromes für jeden Heizkörper über eine variable Bypassregelung erfolgt.

## Beschreibung

Die Erfindung betrifft ein Verfahren zur energetischen Sanierung von Einrohrheizungen nach dem Oberbegriff des Anspruchs 1.

Aus dem Stand der Technik sind Heizungssysteme im so genannten Einrohrsystem hinlänglich bekannt. Üblicher Weise sind dabei bis zu sechs Heizkörper einer Nutzungseinheit durch einen einzigen Rohrstrang an die zentralen Gebäudestränge angebunden. Bei der Einrohrheizung gibt es keine gesonderten Vor- und Rücklaufleitungen für jeden Heizkörper, sondern lediglich eine gemeinsame Ringleitung aus der jeder Heizkörper mit einem prozentualen Anteil an der Ringwassermenge versorgt wird. Der Anteil jedes Heizkörpers wird dabei über eine so genannte Bypassarmatur sichergestellt. Die Heizkörper eines Stranges inklusive deren Bypassarmaturen sind also in Reihe geschaltet.

Der größte Nachteil von Einrohrsystemen besteht darin, dass die Ringwassermenge in erster Näherung unabhängig davon, ob die Ventile der angeschlossenen Heizkörper geöffnet oder geschlossen sind, immer konstant ist. Dies bewirkt, dass die Rücklauftemperatur zum Wärmeerzeuger nie unter den Auslegungswert fällt, sondern bei Teillast höher als der Ausgangswert ist und für den Fall, dass alle Heizkörperventile eines Stranges geschlossen sind, sich sogar der Vorlauftemperatur nähert. Nach einer Fachregel zur "Optimierung von Heizungsanlagen im Bestand" des Zentralverbandes Sanitär Heizung Klima, St. Augustin, Deutschland, aus April 2010, S.13, wird die nachträgliche Einregulierung von Einrohrheizungen als unmöglich angesehen.

Der hydraulische Abgleich von Einrohranlagen wird beispielsweise im Sonderdruck aus 6/2007 "Moderne Gebäudetechnik - Praxisjournal für TGA - Fachplaner" beschrieben. Dabei werden aber lediglich die Volumenströme verschiedener Einrohrstränge gegeneinander abgeglichen, der grundsätzliche Mangel des Systems wird dadurch jedoch nicht beseitigt.

Damit sind Anlagen mit Einrohrsystemen ungeeignet für Heizungsanlagen mit erforderlicher niedriger Rücklauftemperatur, wie z.B. bei Wärmeerzeugung mit Brennwertnutzung, Wärmeverteilung durch Energie -sparende selbst regelnde Heizungsumwälzpumpen. Das bedeutet, dass ein erhebliches Energiesparpotential an Primärenergie am Wärmeerzeuger und beim Pumpenstrom nicht erschlossen werden kann.

Die Aufgabe der vorliegenden Erfindung besteht deshalb darin, diese Nachteile zu überwinden. Erfindungsgemäß wird diese Aufgabe durch die Merkmale des Anspruchs 1 gelöst. Vorteilhafte Weiterbildungen der Erfindung sind in den nach geordneten bzw. zugehörigen Ansprüchen enthalten.

Die Aufgabe wird erfolgreich gelöst durch die Bereitstellung eines Verfahrens zur energetischen Sanierung von Einrohrheizungen, welches sich dadurch auszeichnet, dass unabhängig von der Wärmeabnahme der am Einrohrstrang angeschlossenen Heizkörper eine Temperaturspreizung zwischen Strangvorlauf und Strangrücklauf in etwa konstant gehalten wird und abhängig von der Wärmeabnahme der am Einrohrstrang angeschlossenen Heizkörper der Primär-Heizmittelmassenstrom am Wärmeerzeuger reduziert wird sowie eine eventuelle Unterversorgung von Heizkörpern infolge eines reduzierten Strangmassenstromes vermieden wird. Dabei sind erfindungsgemäß verschiedene Ausführungsvarianten des Verfahrens möglich, deren wesentlichen Merkmale die Bereitstellung einer Mindestspreizung zwischen Vor- und Rücklauftemperatur des Einrohrstranges in Verbindung mit einer gegenläufigen dynamischen Anpassung der Heizkörpermassenströme durch eine besondere Ventileinrichtung an jedem Heizkörper des Einrohrstranges sind.

Nach einer ersten Ausführungsform der Erfindung ist vorgesehen, dass jeder Einrohrstrang eine eigene Umwälzpumpe und ein Drossel- (Regel-) Ventil am Anschluss zu den zentralen Steigsträngen erhält. Die Temperaturdifferenz (Δ t) zwischen Vorlauf und Rücklauf des Stranges wird detektiert und wirkt auf einen Sollwertgeber. In Abhängigkeit von der Temperaturdifferenz über dem Strang wird die Stellung des Drosselventils verändert. Bei Volllast, wenn alle Ventile der am Strang angeschlossenen Heizkörper voll geöffnet sind, ergibt sich zwischen Strangvorlauf und Strangrücklauf die Auslegungsspreizung. Das bedeutet, dass der Sollwertgeber das Drosselventil voll geöffnet hält. Die Pumpe läuft dabei in der Auslegungsdrehzahl. Bei Teillast, d.h. wenn z.B. von den Heizkörpern nur 50% des Massenstromes angefordert wird, verringert sich die tatsächlich über Strangvorlauf und Strangrücklauf einstellende Temperaturspreizung, was den Sollwertgeber veranlasst, das Drosselventil teilweise zu schließen. Damit verringert das Drosselventil den Strangmassenstrom soweit, dass die für den Lastfall erforderliche Mindestspreizung zwischen Strangvorlauf- und Strangrücklauftemperatur wieder erreicht wird. In Folge des höheren Druckverlustes reduziert die Pumpe selbsttätig die Leistungsaufnahme. Im Falle, dass alle am Strang angeschlossenen Heizkörperventile geschlossen sind, schließt das Drosselventil bis auf einen kleinen Mindestquerschnitt. Damit ist ein geringer Mindestmassenstrom über den Strang sichergestellt, der dazu dient, ein sich öffnendes Heizkörperventil am dadurch ausgelösten Temperaturabfall zu detektieren.

Nach einer weiteren vorteilhaften Ausführungsvariante ist vorgesehen, dass jeder Einrohrstrang eine eigene Umwälzpumpe erhält, deren Drehzahl durch einen geeigneten Drehzahlsteller beeinflussbar ist. Die Temperaturdifferenz zwischen Vor- und Rücklauf des Stranges wird detektiert und wirkt auf den Sollwertgeber. In Abhängigkeit von der Temperaturdifferenz über den Strang wird die Drehzahl der Pumpe verändert. Bei Volllast, also wenn alle Heizkörperventile der am Strang angeschlossenen Heizkörper geöffnet sind, läuft die Pumpe in der Auslegungsdrehzahl. Bei Teillast, d.h. wenn z.B. von den Heizkörpern nur 50% des Massenstromes angefordert wird, verringert der Drehzahlsteller die Pumpendrehzahl und damit den Strangmassenstrom soweit, dass die für den Lastfall erforderliche Mindestspreizung zwischen der Strangvorlauf- und Strangrücklauftemperatur erreicht wird. Wenn alle am Strang angeschlossenen Heizkörperventile geschlossen sind, reduziert der Drehzahlsteller die Pumpendrehzahl auf einen Mindestwert. Damit ist ein geringer Mindestmassenstrom über den Strang sichergestellt, der dazu dient, ein sich öffnendes Heizkörperventil am dadurch ausgelösten Temperaturabfall zu detektieren. Anstelle des Mindestmassenstromes führt ein zyklisches Abschalten der Umwälzpumpe zu dem gleichen Ergebnis.

Nach einer weiteren Variante der Erfindung ist vorgesehen, dass jeder Einrohrstrang eine eigene Umwälzpumpe und eine Bypassstrecke am Anschluss zu den zentralen Steigsträngen erhält. In Abhängigkeit von der Temperaturdifferenz über dem Strang werden die Drehzahl der Pumpe und der Beimischanteil des Strangrücklaufes zum Strangvorlauf verändert. Bei Volllast, wenn alle Ventile der am Strang angeschlossenen Heizkörper voll geöffnet sind, ist der Beimischanteil am Bypass 0% und die Pumpe fährt in der Auslegungsdrehzahl. Bei Teillast, d.h. wenn z.B. von den Heizkörpern nur 50% des Massenstromes angefordert wird, reduziert die Pumpe die Drehzahl und über den Bypass wird ein Teilstrom des Strangrücklaufes dem Strangvorlauf beigemischt.

Besonders vorteilhaft ist in einer weiteren Ausführung der Erfindung vorgesehen, dass jeder Einrohrstrang ein eigenes Regelventil erhält, dessen Öffnungshub durch einen geeigneten Antrieb beeinflussbar ist. Die Temperaturdifferenz zwischen Vor- und Rücklauf des Stranges wird detektiert und wirkt auf einen Sollwertgeber. In Abhängigkeit von der Temperaturdifferenz über dem Strang wird der Öffnungshub des Ventils verändert. Bei Volllast, wenn alle Ventile der am Strang angeschlossenen Heizkörper voll geöffnet sind, befindet sich das Regelventil in Vollöffnung. Bei Teillast, d.h. wenn z.B. von den Heizkörpern nur 50% des Massenstromes angefordert wird, verringert der Sollwertgeber den Ventilhub und damit den Strangmassenstrom soweit, dass die für den Lastfall erforderliche Mindestspreizung zwischen Strangvorlauf- und Strangrücklauftemperatur erreicht wird. Im Fall, dass alle am Strang geschlossen sind, schließt der Sollwertgeber den Ventilhub auf einen Mindestwert. Damit ist ein geringer Mindestmassenstrom über den Strang sichergestellt, der dazu dient ein sich öffnendes Heizkörperventil am dadurch ausgelösten Temperaturabfall zu detektieren. Anstelle des Mindestmassenstromes führen ein zyklisches Öffnen des Regelventils oder auch eine gesonderte Bypassleitung mit geringem Querschnitt zum gleichen Ergebnis.
Diese Variante hat den Vorteil, dass bei niedrig gehaltenem Gesamtaufwand im jeweiligen Einrohrstrang nunmehr die zentrale Umwälzpumpe am Wärmeerzeuger gegen eine selbst regulierende Hocheffizienzpumpe getauscht werden kann, da eine fallende Last jedes Stranges über die einzuhaltende Temperaturspreizung an jedem Regelventil den Gesamtmassenstrom im Gebäude und damit den elektrischen Aufwand für den Pumpenstrom reduziert.
Zudem ist diese Variante besonders vorteilhaft, wenn in einer größeren Liegenschaft nur ein Teil der Einrohrheizstränge saniert werden soll, die Gesamtfunktion der Anlage für den nicht sanierten Anlagenteil aber erhalten werden muss.

Alle Varianten bedingen, dass an den angeschlossenen Heizkörpern eine spezielle Anschlussarmatur verwendet werden muss, die ebenfalls zum Umfang der Erfindung gehört. Die Anschlussarmatur ist in der Lage, mittels eines Gegenkegels beim Öffnen des Heizkörperventils in Abhängigkeit von der Differenz zwischen der Ist- und der Solltemperatur des Raumes den Bypassanteil zugunsten des Heizkörperanteils zu verringern und damit temporär für eine erhöhte Wärmeabgabe des betreffenden Heizkörpers zu sorgen. Umgekehrt wird mittels des Gegenkegels beim Schließen des Heizkörperventils der Bypassanteil zulasten des Heizkörperanteiles und der Wärmeabgabe des Heizkörpers vergrößert. Diese Armatur zeichnet sich insbesondere dadurch aus, dass sie bei einem Regelhub des Thermostatventils von ca.0, 3 mm einen Heizkörperanteil von ca. 35%, bei einem Regelhub von 0,6 mm einen Heizkörperanteil von mindestens ca. 50% und bei Vollöffnung von etwa 75% bis 80 % aufweist.

Alternativ können alle Lösungsansätze noch regelungstechnisch verbessert werden, indem die Heizkörperventile statt der üblichen hilfsenergiefrei arbeitenden Thermostatköpfe elektrische Stellantriebe erhalten, die von Raumreglern angesteuert werden. In einem Strang-Zentralserver können dann die einzelnen Stellsignale der Raumregler ausgewertet werden und direkt auf den Sollwertgeber des betreffenden Stranges und auf die Massenstromanteile der Heizkörper wirken.

In einer weiteren Ausführung ist die Bypassarmatur so gestaltet, dass das Regelventil für den Heizkörper und der Regelkegel für den Bypass von zwei getrennten Stellantrieben angesteuert werden. Die Raumregler wirken hierbei auf einen Strang-Zentralserver, in dem die einzelnen Stellsignale der Raumregler ausgewertet werden. Auf einen sinkenden Raumwärmebedarf wird durch Schließen des jeweiligen Heizkörper-Regelventils reagiert. Die erforderliche Temperaturspreizung über den Einrohrstrang wird durch Drosseln der Bypassventile in Kombination mit der selbst regelnden Pumpe eingehalten.

In einer weiteren Ausführung werden die je Einrohrstrang einzuhaltenden Temperaturdifferenzen nicht als starrer Wert, der über eine ganze Heizperiode gelten soll (z.B. 15 K) angenommen, sondern vom Regler in Abhängigkeit von der Vorlauftemperatur bzw. der mittleren Übertemperatur der Heizkörper gleitend gefahren, bei hohen Vorlauftemperaturen, beispielsweise bei 70° C Vorlauf gilt der Sollwert von 15 K, bei 50° C Vorlauf verringert sich der Sollwert der Temperaturdifferenz über dem Einrohrstrang auf 10 K. Dies hat den Vorteil einer ausgewogeneren Netzhydraulik und einer besseren Funktion der Heizflächen infolge nicht unnötig niedriger Rücklauftemperaturen bei ohnehin schon niedrigen Vorlauftemperaturen.
Ein weiterer Vorteil besteht aus der nunmehr entstehenden Möglichkeit der exakten Wärmemengenzählung je Strang, die nicht mehr durch Ungenauigkeiten aus geringen Temperaturdifferenzen beeinflusst werden kann.

Die oben beschriebenen ersten drei Varianten sind energetisch dann besonders gut zu bewerten, wenn alle Einrohrstränge eines Hauses umgerüstet werden und damit die zentrale Umwälzpumpe am Wärmeerzeuger entfallen kann. Die Varianten sind in einer Gesamtanlage beliebig miteinander kombinierbar.

Nachfolgend wird die Erfindung mit Bezug auf die in den Zeichnungen dargestellten Schaltungen und Figuren näher dargestellt. Es zeigen
- Fig. 1: Schaltungsanordnung für eine Einrohrheizung - Variante 1,
- Fig. 2: Schaltungsanordnung für eine Einrohrheizung - Variante 2,
- Fig. 3: Schaltungsanordnung für eine Einrohrheizung - Variante 3,
- Fig. 4: Schaltungsanordnung für eine Einrohrheizung - Variante 4,
- Fig. 5: Ventilstellung eines Einrohrhahnblocks mit variablem Bypass,
- Fig. 6: Ventilstellung eines Einrohrhahnblocks mit variablem Bypass,
- Fig. 7: Ventilstellung eines Einrohrhahnblocks mit variablem Bypass,
- Fig. 8: Ventilstellung eines Einrohrhahnblocks mit variablem Bypass.

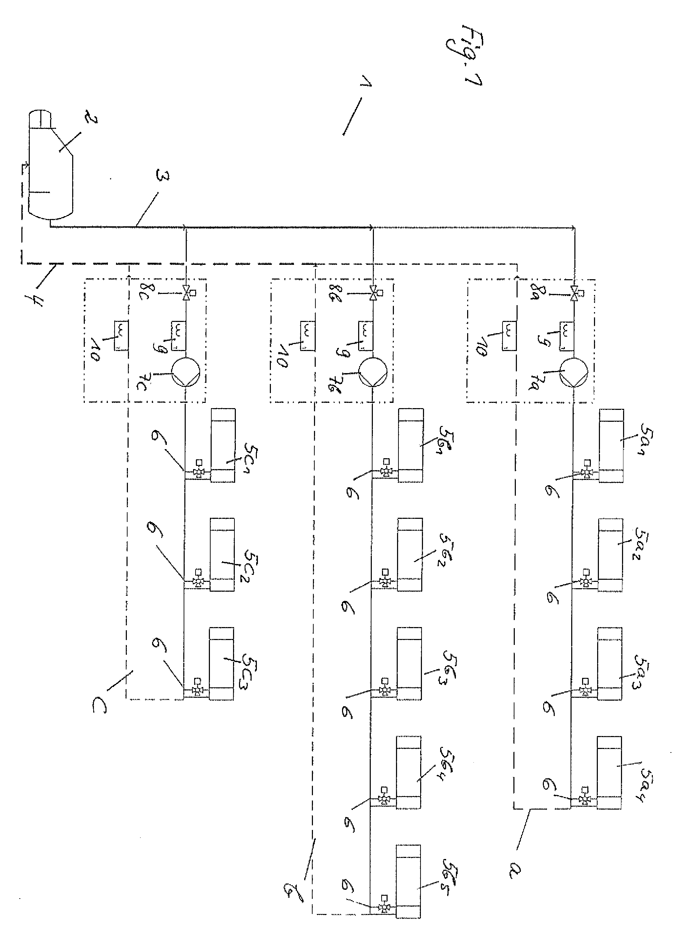

In Fig. 1 ist ein Regelschema für eine Einrohrheizungsanlage 1 gemäß einer Variante (Anspruch 2) der Erfindung dargestellt. Die Einrohrheizungsanlage verfügt über einen Wärmeerzeuger 2, einen zentralen Strangvorlauf 3 und einen Strangrücklauf 4. Die Einrohrheizungsanlage verfügt über drei Einrohrstränge a, b, c mit jeweils mehreren in Reihe geschalteten Heizkörpern 5aₙ, 5bₙ, 5cₙ in unterschiedlicher Anzahl. Jedem Heizkörper 5aₙ, 5bₙ, 5cₙ ist eine geregelte Bypassarmatur 6 zugeschaltet. Jedem Einrohrstrang a, b, c ist eine selbst regelnde Umwälzpumpe 7a, 7b, 7c sowie ein Drossel- (Regel-) Ventil 8a, 8b, 8c zugeordnet. Mit den Bezugszeichen 9 und 10 werden die Sensoren für die Vor- bzw. Rücklauftemperatur des jeweiligen Strangs bezeichnet. Die zwischen Vorlauf und Rücklauf des Stranges detektierte Temperaturdifferenz (Δ t) wirkt auf einen Sollwertgeber. In Abhängigkeit von der Temperaturdifferenz über dem Strang wird die Stellung des jeweiligen Drosselventils 8a, 8b, 8c verändert, wobei sich bei Volllast, wenn alle Ventile der am Strang angeschlossenen Heizkörper 5aₙ, 5bₙ, 5cₙ voll geöffnet sind, zwischen Strangvorlauf und Strangrücklauf die Auslegungsspreizung ergibt und durch den Sollwertgeber die Drosselventile voll geöffnet gehalten werden, wobei die Umwälzpumpe dabei in der Auslegungsdrehzahl läuft. Bei sich verringernder Temperaturspreizung zwischen Strangvorlauf und Strangrücklauf durch Teillast der Heizkörper 5aₙ, 5bₙ, 5cₙ und einen dadurch geringeren angeforderten Heizmittelmassenstrom wird z. B. das Drosselventil 8a über den Sollwertgeber geschlossen, wodurch der Heizmittelmassenstrom soweit verringert wird, dass die für den Lastfall erforderliche Mindestspreizung, zwischen Strangvorlauf- und Strangrücklauftemperatur wieder erreicht wird. Die Umwälzpumpe 7a reduziert in Folge des höheren Druckverlustes die Leistungsaufnahme selbsttätig. Wenn alle am Strang angeschlossenen Heizkörperventile geschlossen sind, wird das Drosselventil 8a bis auf einen Mindestquerschnitt geschlossen, wodurch durch einen geringen Mindestmassenstrom über den Strang sichergestellt wird, dass ein sich öffnendes Heizkörperventil 5aₙ am dadurch ausgelösten Temperaturabfall detektiert werden kann. Anstelle des Mindestmassenstromes führt ein zyklisches Abschalten der Umwälzpumpe zu dem gleichen Ergebnis.
Statt der Abhängigkeit der Regelventilöffnung als Funktion von Δ t kann alternativ auch die mittlere Übertemperatur des Stranges zur Raumtemperatur berücksichtigt werden. Außerdem ist bei Verwendung von Stellmotoren auf den Thermostatventilen eine direkte Rückmeldung an die Steuerelektronik inkl. einer Pumpenabschaltung möglich.

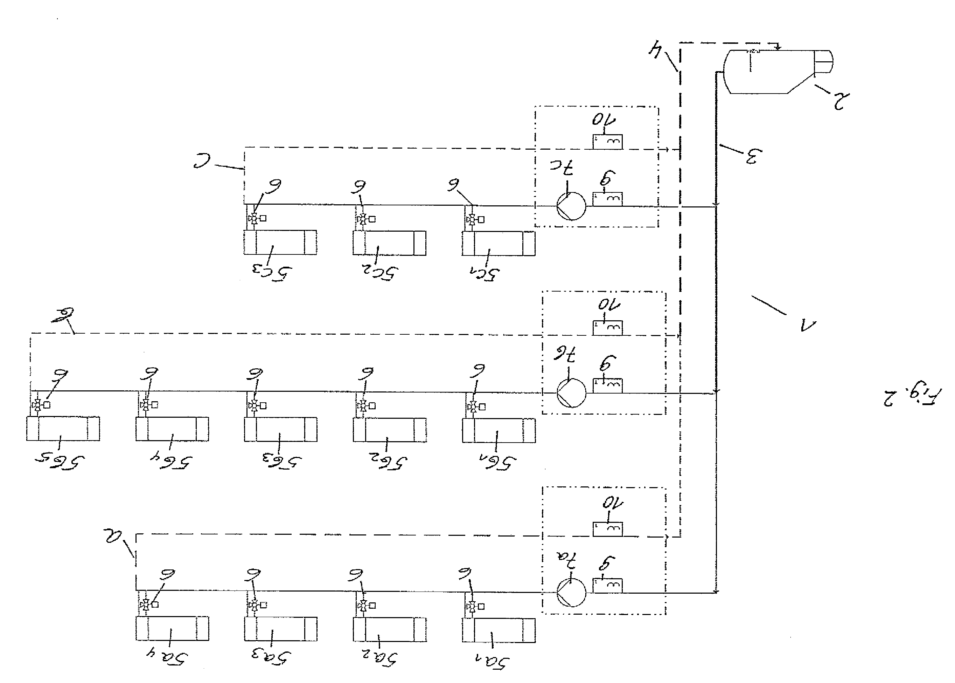

In Fig. 2 ist ein weiteres Regelschema für eine Einrohrheizungsanlage gemäß einer anderen Variante (Anspruch 3) der Erfindung dargestellt. Jedem Einrohrstrang a, b, c wird hier über eine eigene Umwälzpumpe 7a, b, c, deren Drehzahl durch einen geeigneten Drehzahlsteller beeinflussbar ist, zugeordnet. In Abhängigkeit von der Temperaturdifferenz über den Strang wird die Drehzahl der Pumpe verändert. Statt der Abhängigkeit der Pumpendrehzahl als Funktion von Δ t kann alternativ auch eine mittlere Übertemperatur des Stranges zur Raumtemperatur berücksichtigt werden. Außerdem ist bei Verwendung von Stellmotoren auf den Thermostatventilen eine direkte Rückmeldung an die Steuerelektronik inkl. einer Pumpenabschaltung möglich.

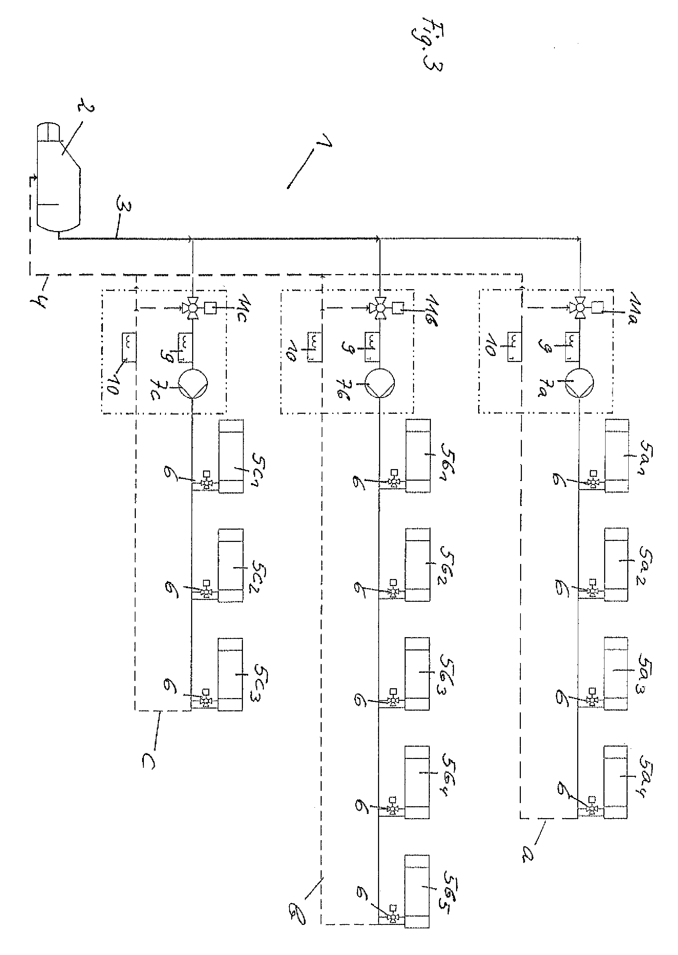

In Fig. 3 ist ein weiteres Regelschema für eine Einrohrheizungsanlage gemäß einer anderen Variante (Anspruch 4) der Erfindung dargestellt. Bei dieser Verfahrensvariante wird jedem Einrohrstrang a, b, c eine eigene Umwälzpumpe 7a, b, c und eine Bypassstrecke (Drei-Wege-Ventil) 11a, b, c am Anschluss zu den zentralen Steigsträngen zugeordnet. In Abhängigkeit von der Temperaturdifferenz Δ t über dem Strang werden die Drehzahl der Pumpe und der Beimischanteil des Strangrücklaufes zum Strangvorlauf über die Bypassstrecke 11a, b, c verändert. Statt der Abhängigkeit der Regelventilöffnung als Funktion von Δ t kann alternativ auch eine mittlere Übertemperatur des Stranges zur Raumtemperatur berücksichtigt werden. Außerdem ist bei Verwendung von Stellmotoren auf den Thermostatventilen eine direkte Rückmeldung an die Steuerelektronik inkl. einer Pumpenabschaltung möglich.

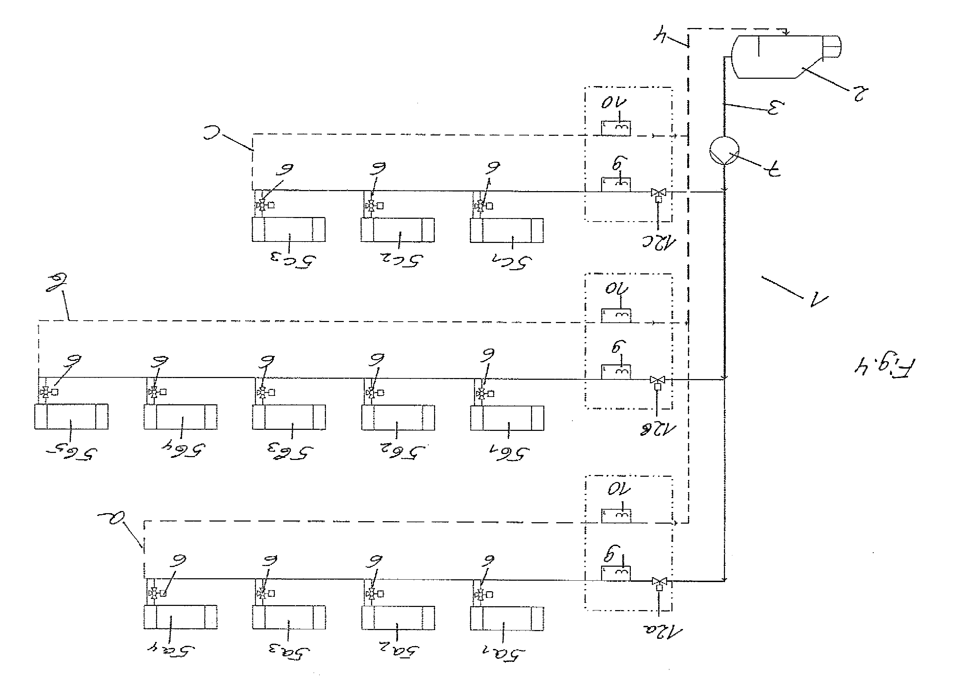

In Fig. 4 ist ein weiteres Regelschema für eine Einrohrheizungsanlage gemäß einer anderen Variante (Anspruch 5) der Erfindung dargestellt. Im zentralen Vorlaufstrang ist eine Umwälzpumpe 7 angeordnet. Jedem Einrohrstrang a, b, c wird hier ein eigenes Regelventil 12a, b, c zugeordnet, dessen Öffnungshub durch einen geeigneten Antrieb beeinflussbar ist. In Abhängigkeit von der Temperaturdifferenz Δ t über dem Strang wird der Öffnungshub des Ventils verändert. Statt der Abhängigkeit der Regelventilöffnung als Funktion von Δ t kann alternativ auch eine mittlere Übertemperatur des Stranges zur Raumtemperatur berücksichtigt werden. Außerdem ist bei Verwendung von Stellmotoren auf den Thermostatventilen eine direkte Rückmeldung an die Steuerelektronik inkl. einer Pumpenabschaltung möglich.

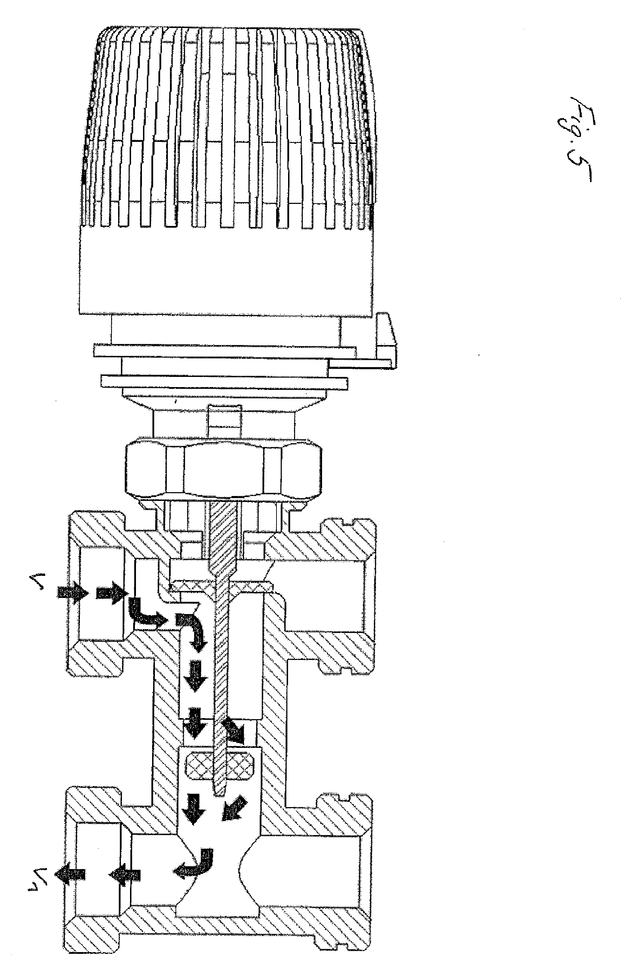

In den Fig. 5 bis 8 sind verschiedene Ventilstellungen eines Einrohrhahnblocks (Schnittdarstellung) mit variablem Bypass dargestellt. Derartige Bypassarmaturen 6 sind Bestandteile aller oben beschriebenen Verfahrensvarianten und werden jedem Heizkörper 5aₙ, 5bₙ, 5cₙ eines Einrohrstrangs a, b, c zugeordnet.

In Fig. 5 wird ein geschlossenes Ventil 6 gezeigt. Der Bypassanteil V₁ beträgt 100%.

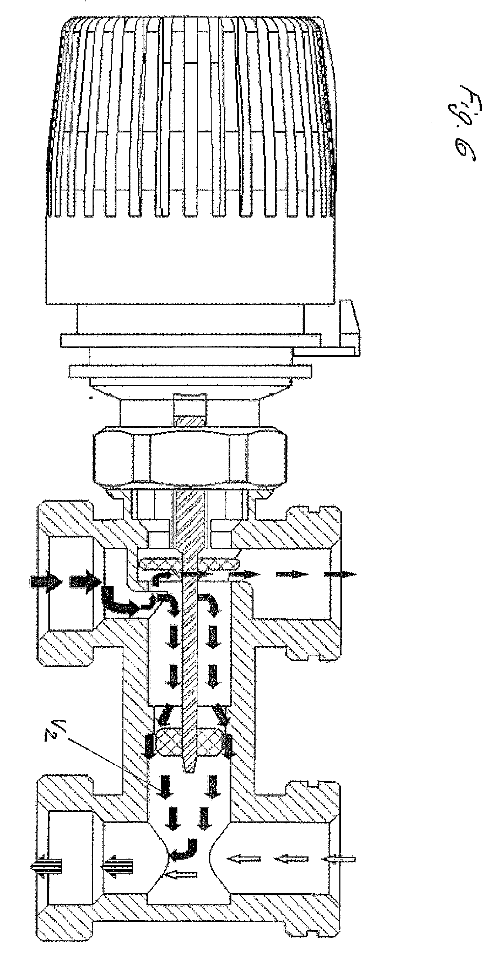

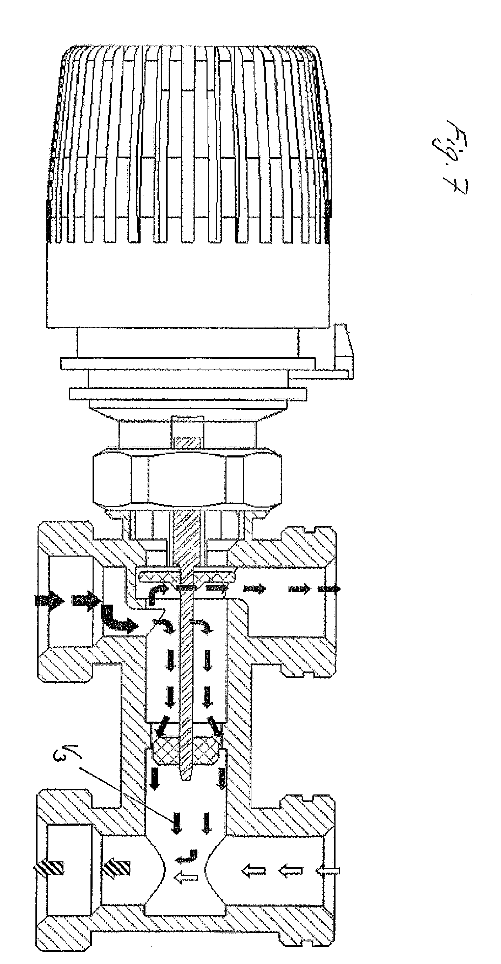

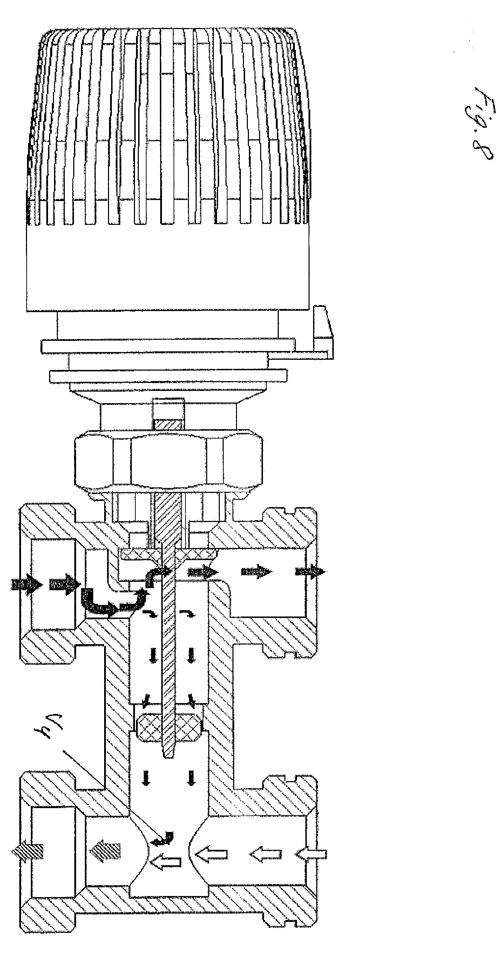

In Fig. 6 wird ein Ventil 6 gezeigt, welches zu 25% geöffnet ist. Der Bypassanteil V₂ beträgt 75%. In Fig. 7 wird ein Ventil 6 gezeigt, welches zu 50% geöffnet ist. Der Bypassanteil V₃ beträgt 50%. In Fig. 8 wird ein Ventil 6 gezeigt, welches ganz geöffnet ist. Der Bypassanteil V₄ beträgt 25%.

Die Einrohrhahnblöcke unter den Heizkörpern weisen über einen weiten Regelbereich (von Heizkörperanteil 0% mit Bypassanteil 100% bis Heizkörperanteil 50% mit Bypassanteil 50%) einen annähernd gleichbleibenden Durchflusswiderstand auf. Damit wirken sich die von den Thermostatköpfen verursachten Regelhübe nicht auf die Stranghydraulik aus.
Erreicht wird dieser Effekt durch eine besondere Gestaltung der beiden im Hahnblock untergebrachten Regelkonturen, nämlich zum Einen der Kontur des Ventiles, welches den Fließweg zum Heizkörper freigibt und zum Anderen der Kontur des mittels einer Ventilstange mit dem Heizkörperventil verbundenen Drosselkegels im parallel zum Heizkörper angeordneten Bypass. Öffnet das Heizkörperventil, schließt in etwa gleichem Maße der Bypass und umgekehrt.
Die vom Regler annähernd konstant gehaltene Spreizung variiert mit der von der Außentemperatur abhängigen Vorlauftemperatur, um bei niedrigen Vorlauftemperaturen eine Unterversorgung von Heizkörpern infolge Annäherung der Rücklauftemperaturen an die Raumtemperatur zu vermeiden.
Bei sehr geringer Lastabnahme am Einrohrstrang wird unabhängig von der Spreizung ein Mindestmassenstrom sichergestellt, um Laständerungen, die ja ausschließlich über eine Änderung der Strang-Rücklauftemperatur erfasst werden, in einer für den Nutzer angemessenen Zeit zu detektieren.
Bei Wärmeerzeugern, deren Betriebsverhalten eine große Schwankung der Vorlauftemperatur bewirkt, z. T. mehr als 10 K Temperaturdifferenz zwischen Einschalt- und Ausschaltzeiten, werden die Schwankungen der erfassten Vorlauftemperatur durch Mittelwertbildung oder ein anderes geeignetes Glättungsverfahren, ausgeglichen.

## Patentansprüche

1. Verfahren zur energetischen Sanierung von Einrohrheizungen, wobei diese mindestens einen Wärmeerzeuger zur Erzeugung eines Heizmittelmassenstromes, eine Umwälzpumpe, ein zentrales Regelventil und mehrere über eine Ringleitung miteinander verbundene, in Reihe geschaltete Heizkörper umfassen und jedem Heizkörper eine Bypassarmatur zur Zuteilung des Heizmittelmassenstromes aus einem zentralen Strangvorlauf vorgeschaltet ist, **dadurch gekennzeichnet, dass** unabhängig von der Wärmeabnahme der am Einrohrstrang angeschlossenen Heizkörper eine vorab detektierte an einen Sollwertgeber übermittelte Temperaturdifferenz zwischen dem Strangvorlauf und dem Strangrücklauf zumindest annähernd konstant gehalten wird und abhängig von der Wärmeabnahme der am Einrohrstrang angeschlossenen Heizkörper der Primär - Heizmittelmassenstrom am Wärmeerzeuger reduziert wird, wobei über die jedem Heizkörper zugeordnete Bypassarmatur eine gegenläufige dynamische Anpassung des Heizmittelmassenstromes für jeden Heizkörper über eine variable Bypassregelung erfolgt.

2. Verfahren nach Anspruch 1, **dadurch gekennzeichnet, dass**
- jedem Einrohrstrang eine Umwälzpumpe und ein Drossel- (Regel-) Ventil am Anschluss zu den zentralen Steigsträngen zugeordnet wird,
- die zwischen Vorlauf und Rücklauf des Stranges detektierte Temperaturdifferenz (Δt) auf einen Sollwertgeber wirkt,
- in Abhängigkeit von der Temperaturdifferenz über dem Strang die Stellung des Drosselventils verändert wird, wobei sich bei Volllast, wenn alle Ventile der am Strang angeschlossenen Heizkörper voll geöffnet sind, sich zwischen Strangvorlauf und Strangrücklauf die Auslegungsspreizung ergibt, wobei durch den Sollwertgeber das Drosselventil voll geöffnet gehalten wird und die Umwälzpumpe dabei in der Auslegungsdrehzahl läuft,
- bei sich verringernder Temperaturspreizung zwischen Strangvorlauf und Strangrücklauf durch Teillast der Heizkörper und einen dadurch geringeren angeforderten Heizmittelmassenstrom, über den Sollwertgeber das Drosselventil geschlossen wird, wodurch der Heizmittelmassenstrom soweit verringert wird, dass die für den Lastfall erforderliche Mindestspreizung zwischen Strangvorlauf- und Strangrücklauftemperatur wieder erreicht wird, wobei die Umwälzpumpe in Folge des höheren Druckverlustes die Leistungsaufnahme selbsttätig reduziert,
- wenn alle am Strang angeschlossenen Heizkörperventile geschlossen sind, das Drosselventil bis auf einen Mindestquerschnitt geschlossen wird, wodurch durch einen geringen Mindestmassenstrom über den Strang sichergestellt wird, dass ein sich öffnendes Heizkörperventil am dadurch ausgelösten Temperaturabfall detektieren kann.

3. Verfahren nach den Anspruch 1, **dadurch gekennzeichnet, dass**
- jedem Einrohrstrang eine Umwälzpumpe zugeordnet wird, deren Drehzahl durch einen Drehzahlsteller beeinflussbar ist,
- die Temperaturdifferenz zwischen Vor- und Rücklauf des Stranges detektiert wird und auf den Sollwertgeber wirkt,
- in Abhängigkeit von der Temperaturdifferenz über den Strang die Drehzahl der Pumpe verändert wird, wobei bei Volllast, wenn alle Heizkörperventile der am Strang angeschlossenen Heizkörper geöffnet sind, die Pumpe in der Auslegungsdrehzahl läuft, bei Teillast von den Heizkörpern ein geringerer Massenstromes angefordert wird, durch Drehzahlsteller die Pumpendrehzahl verringert wird, wobei der Strangmassenstrom dadurch soweit verringert wird, dass die für den Lastfall erforderliche Mindestspreizung zwischen der Strangvorlauf- und Strangrücklauftemperatur erreicht wird,
- wenn alle am Strang angeschlossenen Heizkörperventile geschlossen sind, durch den Drehzahlsteller die Pumpendrehzahl auf einen Mindestwert reduziert wird, wodurch durch einen geringen Mindestmassenstrom über den Strang sichergestellt wird, dass ein sich öffnendes Heizkörperventil am dadurch ausgelösten Temperaturabfall detektieren kann.

4. Verfahren nach den Anspruch 1, **dadurch gekennzeichnet, dass** jedem Einrohrstrang eine Umwälzpumpe und ein 3-Wege-Ventil als Bypassstrecke am Anschluss zu den zentralen Steigsträngen zugeordnet wird, in Abhängigkeit von der Temperaturdifferenz über dem Strang die Drehzahl der Pumpe und der Beimischanteil des Strangrücklaufes zum Strangvorlauf verändert wird, wobei bei Volllast, wenn alle Ventile der am Strang angeschlossenen Heizkörper voll geöffnet sind, die Pumpe in der Auslegungsdrehzahl fährt und der Beimischanteil am Bypass gleich Null ist, bei Teillast, wenn von den Heizkörpern nur ein geringer Massenstrom angefordert wird, sich die Drehzahl der Pumpe reduziert und über den Bypass wird ein Teilstrom des Strangrücklaufes dem Strangvorlauf beigemischt wird.

5. Verfahren nach Anspruch 1, **dadurch gekennzeichnet, dass**
- jedem Einrohrstrang ein Regelventil zugeordnet wird, dessen Öffnungshub durch einen Antrieb beeinflussbar ist,
- die Temperaturdifferenz zwischen Vor- und Rücklauf des Stranges detektiert wird und auf einen Sollwertgeber wirkt,
- der Öffnungshub des Ventils in Abhängigkeit von der Temperaturdifferenz über dem Strang verändert wird,
- bei Volllast, wenn alle Ventile der am Strang angeschlossenen Heizkörper voll geöffnet sind, das Regelventil voll geöffnet ist,
- bei Teillast, wenn von den Heizkörpern ein geringerer Teil des Massenstromes angefordert wird, durch den Sollwertgeber der entsprechend Ventilhub und damit der Strangmassenstrom soweit verringert wird, dass die für den Lastfall erforderliche Mindestspreizung zwischen Strangvorlauf- und Strangrücklauftemperatur erreicht wird,
- wenn alle Heizkörper am Strang geschlossen sind, durch den Sollwertgeber der Ventilhub auf einen Mindestwert geschlossen wird, wobei dadurch ein geringer Mindestmassenstrom über den Strang sichergestellt wird, der dazu vorgesehen ist, ein sich öffnendes Heizkörperventil am dadurch ausgelösten Temperaturabfall zu detektieren.

6. Verfahren nach einem der Ansprüche 1 bis 5, **dadurch gekennzeichnet, dass** für die jedem Heizkörper des Einrohrstrangs zugeschaltete Bypassarmatur eine Anschlussarmatur eingesetzt wird, die mittels eines Gegenkegels beim Öffnen des Heizkörperventiles in Abhängigkeit von der Differenz zwischen der Ist- und der Solltemperatur des Raumes den Bypassanteil zugunsten des Heizkörperanteils verringert und damit temporär eine erhöhte Wärmeabgabe des betreffenden Heizkörpers erfolgt und umgekehrt mittels des Gegenkegels beim Schließen des Heizkörperventils der Bypassanteil zulasten des Heizkörperanteiles und der Wärmeabgabe des Heizkörpers vergrößert wird.

7. Verfahren nach Anspruch 6, **dadurch gekennzeichnet, dass** durch die Anschlussarmatur bei einem Regelhub des Thermostatventils von ca.0,3 mm einen Heizkörperanteil des Strangvorlaufs von ca. 35%, bei einem Regelhub von 0,6 mm ein Heizkörperanteil von mindestens ca. 50% und bei Vollöffnung von etwa 75% bis 80 % erreicht wird.
